(19) Europäisches Patentamt
European Patent Office
Office européen des brevets

(11) **EP 3 287 184 B1**

(12) # EUROPÄISCHE PATENTSCHRIFT

(45) Veröffentlichungstag und Bekanntmachung des Hinweises auf die Patenterteilung:
**23.10.2019 Patentblatt 2019/43**

(21) Anmeldenummer: **17187299.7**

(22) Anmeldetag: **22.08.2017**

(51) Int Cl.:
***B01D 35/143*** *(2006.01)*     ***F16N 39/06*** *(2006.01)*
***F01M 11/10*** *(2006.01)*     *F01M 1/10* *(2006.01)*
***F01M 11/03*** *(2006.01)*

(54) **VERFAHREN ZUR BESTIMMUNG EINES BELADUNGSGRADES EINES FILTERS**

METHOD FOR DETERMINING A LOAD LEVEL ON A FILTER

PROCÉDÉ DE DÉTERMINATION D'UN DEGRÉ DU CHARGE D'UN FILTRE

(84) Benannte Vertragsstaaten:
**AL AT BE BG CH CY CZ DE DK EE ES FI FR GB GR HR HU IE IS IT LI LT LU LV MC MK MT NL NO PL PT RO RS SE SI SK SM TR**

(30) Priorität: **24.08.2016 DE 102016215909**

(43) Veröffentlichungstag der Anmeldung:
**28.02.2018 Patentblatt 2018/09**

(73) Patentinhaber: **Deere & Company**
**Moline, IL 61265 (US)**

(72) Erfinder: **Meid, Michael**
**68163 Mannheim (DE)**

(74) Vertreter: **Dehnhardt, Florian Christopher**
**John Deere GmbH & Co. KG**
**Global Intellectual Property Services**
**John-Deere-Straße 70**
**68163 Mannheim (DE)**

(56) Entgegenhaltungen:
**EP-A1- 1 473 069**     **WO-A1-2015/032765**
**DE-A1-102016 100 211**     **US-A1- 2011 054 811**

**Beschreibung**

Die Erfindung betrifft ein Verfahren zur Bestimmung eines Beladungsgrades eines von einem Fluid durchströmten Filtermediums einer Filtervorrichtung an einem Fahrzeug.

Bei Fahrzeugen verschiedener Bauarten werden Ölfilter (z.B. für ein Getriebe oder einen Antriebsmotor) verwendet, um Fremdstoffe im Öl, wie Verunreinigungen, Partikel, etc. zu filtern. Die Fremdstoffe setzen sich als Beladung am Filtermedium ab, so dass mit zunehmender Beladung die Filterfunktion beeinträchtigt wird. Um die Filterfunktion ordnungsgemäß aufrechtzuerhalten, ist es üblich, den verwendeten Ölfilter (oder zumindest dessen vom Fluid durchströmtes Filtermedium) in regelmäßigen Zeitintervallen auszutauschen.

Das Dokument US2011/0054811 A1 betrifft ein System zum Überwachen eines Filters, der zum Filtern eines Fluids in einem Flugzeugmotor verwendet wird.

Aufgabe der vorliegenden Erfindung ist es, einen bedarfsgerechteren Filterwechsel zu ermöglichen.

Diese Aufgabe wird gemäß den Merkmalen des Patentanspruchs 1 gelöst.

Erfindungsgemäß ist ein Verfahren vorgesehen, welches eine Bestimmung des Beladungsgrades des von einem Fluid durchströmten Filtermediums einer Filtervorrichtung ermöglicht. Zur Bestimmung dieses Beladungsgrades wird eine Betriebs-Information der Filtervorrichtung (z.B. des Filtermediums und/oder eines das Filtermedium aufnehmenden Filtergehäuses) in Abhängigkeit mindestens einer Betriebsgröße des Fahrzeugs ermittelt, wobei die mindestens eine Betriebsgröße insbesondere während des Betriebes des Fahrzeugs erfasst (z.B. detektiert, sensiert, überwacht oder rechnerisch bestimmt) wird. Die ermittelte Betriebs-Information wird mit einer vordefinierten Referenz-Information der Filtervorrichtung (z.B. anhand eines Kennfeldes relevanter physikalischer Größen, einer Referenz-Kennlinie oder Referenz-Kenndaten des Herstellers des Filtermediums) verglichen. Aus diesem Vergleich bzw. dem Vergleichsergebnis wird der aktuelle Beladungsgrad entweder unmittelbar oder nach weiteren Verarbeitungsschritten abgeleitet bzw. bestimmt.

Der Begriff "Beladungsgrad" ist vorzugsweise als eine prozentuale Angabe von 0% - 100% zu verstehen, wobei die Angabe 100% einer vordefinierten maximalen Beladungsmenge entspricht. Es sind jedoch auch andere Angaben für den "Beladungsgrad" denkbar, z.B. als Mengenangabe (z.B. in Gramm) oder in anderen physikalischen Einheiten. Ganz allgemein erlaubt die Ableitung bzw. Bestimmung des Beladungsgrades also eine Aussage darüber, wie stark das Filtermedium bereits beladen ist bzw. welche Filterkapazität das Filtermedium noch zur Verfügung stellen kann. Eine Signalisierung an den Fahrzeugführer oder einen Nutzer kann beispielsweise über Zahlen- und/oder Textangaben oder über eine mehrstufige optische Signalleiste bzw. Balkendarstellung erfolgen.

Die Bestimmung des Beladungsgrades ermöglicht eine permanente Information über den aktuellen Beladungszustand des Filtermediums. Ein Wechsel des Filtermediums kann deshalb individuell und bedarfsgerecht erfolgen. Der Fahrzeugführer oder ein Benutzer kann dann beispielsweise selbst festlegen, bei welchem signalisierten Beladungsgrad (z.B. von 0% bis 100%) das Filtermedium gewechselt werden soll.

Im Gegensatz zu herkömmlichen Filterwechseln mit starren Wechselintervallen unabhängig von der Kenntnis eines tatsächlichen Beladungsgrades ermöglicht die vorgenannte Bestimmung und Signalisierung des aktuellen Beladungsgrades auch eine effiziente und kostensparende Wartung des Fahrzeugs hinsichtlich des Filterbetriebs.

Bei dem Fahrzeug handelt es sich vorzugsweise um ein industrielles oder landwirtschaftliches Nutzfahrzeug, insbesondere einen Traktor.

Vorzugsweise weist die Referenz-Information eine Referenz-Filterkonstante auf oder die Referenz-Information besteht aus einer solchen Referenz-Filterkonstante. Die Referenz-Filterkonstante kann unterschiedlicher Art sein und beispielsweise den Kennlinien-Daten des Herstellers des betreffenden Filtermediums bei Referenzbedingungen entnommen werden oder davon abgeleitet werden. Die Referenz-Filterkonstante repräsentiert insbesondere einen vordefinierten oberen Grenzwert der Beladung (z.B. Beladungsmenge in Gramm) bei Referenzbedingungen, die den Kennlinien-Daten des Herstellers des betreffenden Filtermediums entnehmbar sind. Die Referenz-Filterkonstante $c_{f,ref}$ kann z.B. der Gleichung

$$dp_{F,ref} \;=\; c_{F,ref} \cdot \eta_{ref} \cdot Q_{ref}$$

entnommen werden. Hierbei bedeuten die genannten physikalischen Größen bei Referenzbedingungen

- $dp_{F,ref}$ ein Druckverlust des Filtermediums,
- $\eta_{ref}$ eine dynamische Viskosität des Fluids, und
- $Q_{ref}$ ein Volumenstrom des Fluids durch das Filtermedium.

Die Referenz-Filterkonstante kann mit einer während des Fahrzeugbetriebes ermittelten Betriebs-Filterkonstante verglichen werden, um einen aktuellen Beladungsgrad abzuleiten. Vorzugsweise wird eine Betriebs-Filterkonstante $c_F$ auf Basis der obigen Gleichung ermittelt, indem während des Fahrzeugbetriebs ein Druckverlust $dp_F$ des Filtermediums, eine bei diesem Druckverlust $dp_F$ vorhandene dynamische Viskosität $\eta(T)$ des Fluids in Abhängigkeit der Fluidtemperatur T, und ein bei diesem Druckverlust $dp_F$ vorhandener Volumenstrom Q des Fluids durch das Filtermedium ermittelt oder berechnet werden.

Für eine einfache Bestimmung des Beladungsgrades kann die Überlegung zugrunde gelegt werden, dass der Gradient $c_F \cdot \eta(T)$ abhängig von der Filterbeladung ist und mit steigender Filterbeladung zunimmt. Beispielsweise kann ein Verhältnis $c_F/c_{F,ref}$ gebildet werden, um einen aktuellen Beladungsgrad abzuleiten, wobei die Referenz-Filterkonstante $c_{F,ref}$ den vordefinierten oberen Grenzwert der Beladung repräsentiert und somit einem vordefinierten Beladungsgrad von 100% entspricht.

In einer weiteren bevorzugten Ausführungsform weist die Referenz-Information einen das Filtermedium repräsentierenden Druckverlust $dp_{F,ref}$ in Abhängigkeit einer Beladung (z.B. Beladungsmenge in Gramm) auf, oder die Referenz-Information besteht aus einem solchen physikalischen Zusammenhang. Dieser Druckverlust $dp_{F,ref}$ als Funktion der Beladung wird vorzugsweise als Kennlinien-Daten des Herstellers des betreffenden Filtermediums bereitgestellt. Diese Funktion kann dann mit einem während des Fahrzeugbetriebs ermittelten Druckverlust $dp_F$ des Filtermediums als Betriebs-Information verglichen werden, um aus diesem Vergleich den aktuellen Beladungsgrad des Filtermediums abzuleiten.

Vorzugsweise wird die Betriebs-Information in Abhängigkeit mindestens einer der folgenden Betriebsgrößen ermittelt:

- einer Temperatur T des Fluids,
- einer Drehzahl n eines Antriebsmotors des Fahrzeugs.

Hierdurch kann mit einer geringen Anzahl von Betriebsgrößen bzw. Betriebsparametern die Betriebs-Information ermittelt werden. Vorteilhaft stehen diese Betriebsparameter als Daten für andere Zwecke ohnehin bereits standardmäßig am Fahrzeug zur Verfügung, so dass der Aufwand für die Ermittlung der Betriebs-Information gering bleibt und insbesondere auch keine zusätzlichen Sensoren, Detektoren oder dergleichen benötigt werden.

Weiterhin bevorzugt wird die Betriebs-Information in Abhängigkeit mindestens einer der folgenden Betriebsgrößen ermittelt:

- einer temperaturabhängigen Dichte $\rho(T)$ des Fluids,
- einer temperaturabhängigen Viskosität $\eta(T)$ des Fluids,
- eines von der Drehzahl n des Antriebsmotors des Fahrzeugs und/oder der Temperatur T des Fluids unabhängigen Volumenstromes $Q(n,T)$ des Fluids.

Diese Betriebsgrößen bzw. Betriebsparameter können besonders einfach ermittelt werden, wenn die Temperatur T des Fluids und die Drehzahl n des Antriebsmotors ohnehin standardmäßig zur Verfügung stehen. Zur Ermittlung der vorgenannten Dichte, Viskosität und des Volumenstroms lassen sich vorteilhaft spezifische physikalische Gleichungen und/oder Kennfelder heranziehen, welche die Temperatur T des Fluids und/oder die Drehzahl n des Antriebsmotors als Variable oder Variablen enthalten.

Vorteilhaft ist das Filtermedium in ein Filtergehäuse der Filtervorrichtung eingebracht bzw. eingelegt, wobei die Filtervorrichtung einen Filtereingang und einen Filterausgang aufweist. Die gewünschte Betriebs-Information kann dann in Abhängigkeit mindestens einer der folgenden Betriebsgrößen ermittelt werden:

- einem Druckverlust des Filtergehäuses,
- einem Druckverlust der Filtervorrichtung zwischen dem Filtereingang und dem Filterausgang.

Diese Druckverluste lassen sich beispielsweise mittels physikalischer Gleichungen und/oder mittels einer Differenzdruckermittlung bestimmen. Für eine einfache Bestimmung des Druckverlustes am Filtermedium kann die Überlegung zugrunde gelegt werden, dass der Druckverlust der Filtervorrichtung zwischen Filtereingang und Filterausgang etwa der Summe der Druckverluste des Filtergehäuses und des Filtermediums entspricht. Vorzugsweise wird der Druckverlust des Filtergehäuses rechnerisch bestimmt und der Druckverlust der Filtervorrichtung durch eine Differenzdruckermittlung bestimmt. Daraus lässt sich mit obigem Zusammenhang der Druckverlust $dp_F$ des Filtermediums bestimmen und daraus eine Betriebs-Filterkonstante $c_F$ ableiten.

Die vorgenannte Differenzdruckermittlung der Filtervorrichtung erfolgt erfindungsgemäss durch einen Differenzdruckschalter.

Im Falle der Verwendung eines oder mehrerer Drucksensoren oder eines Differenzdrucksensors kann der Druckverlust bzw. Differenzdruck zwischen dem Filtereingang und Filterausgang in jedem Betriebspunkt ermittelt werden.

Dies ermöglicht eine kontinuierliche Ermittlung der Betriebs-Information und entsprechend kontinuierliche Bestimmung des aktuellen Beladungsgrades während des Fahrzeugbetriebs.

Erfindungsgemäss entspricht der Druckverlust der Filtervorrichtung zwischen Filtereingang und Filterausgang dem Differenzdruck eines Differenzdruckschalters in dessen Umschaltpunkt. Der Differenzdruck im Umschaltpunkt ist hierbei für jeden verwendeten Differenzdruckschalter bereits bekannt bzw. durch dessen technische Dimensionierung definiert. Für die Ermittlung der Betriebs-Information werden dann mindestens eine Betriebsgröße bzw. Betriebsparameter mit ihren Werten im Zeitpunkt dieses Umschaltpunktes herangezogen. Somit werden mit einfachen technischen Mitteln die Betriebsbedingungen im Umschaltpunkt des Differenzdruckschalters für eine genaue Bestimmung des Beladungsgrades verwendet. Hierbei wird die Funktionalität des Differenzdruckschalters genutzt, wonach außerhalb seines Umschaltpunktes zwei unterschiedliche Schaltzustände vorliegen, nämlich ein erster Schaltzustand (mit kleinerem bzw. größerem Differenzdruck als im Umschaltpunkt) und ein zweiter Schaltzustand (mit größerem bzw. kleinerem Differenzdruck als im Umschaltpunkt).

Vorzugsweise weist der Differenzdruckschalter vor der Ermittlung der Betriebs-Information einen der beiden vorgenannten Schaltzustände auf. Vorteilhaft wird dann der Umschaltpunkt des Differenzdruckschalters technisch einfach erzielt, indem eine sich ändernde (erhöhende oder verringernde) Drehzahl eines Antriebsmotors des Fahrzeugs (z.B. bei Beschleunigung oder bei Verzögerung des Fahrzeugs) dazu genutzt wird, dass der Differenzdruckschalter von dem ersten Schaltzustand in den zweiten Schaltzustand wechselt. Es muss also technisch einfach lediglich der Umschaltpunkt erkannt werden, um die Betriebs-Information mittels der im Zeitpunkt des Umschaltpunktes relevanten Betriebsgrößen bzw. Betriebsparameter zu ermitteln.

Um einen zuverlässigen technischen Ablauf des Verfahrens zu unterstützen, können weitere Verfahrensschritte vorgesehen sein. Insbesondere wird vor der Veränderung der Drehzahl des Antriebsmotors geprüft, ob der Differenzdruckschalter bereits den erforderlichen Schaltzustand (Soll-Schaltzustand) aufweist. Sollte dies nicht der Fall sein (d. h. der Differenzdruckschalter befindet sich außerhalb des Umschaltpunktes in einem anderen als in dem erforderlichen Soll-Schaltzustand), wird zunächst mindestens eine Betriebsgröße bzw. ein Betriebsparameter zumindest solange verändert (z.B. Erhöhung der Temperatur des Fluids) oder eine Veränderung dieser mindestens einen Betriebsgröße bzw. des mindestens einen Betriebsparameters zumindest solange abgewartet, bis der erforderliche Soll-Schaltzustand des Differenzdruckschalters festgestellt wird. Danach kann eine sich verändernde Drehzahl (Erhöhung oder Verringerung der Drehzahl) des Antriebsmotors zur Durchführung des Verfahrens verwendet werden.

Das Fluid ist vorzugsweise ein Öl oder als ölhaltiges Fluid ausgebildet. Entsprechend kann das Verfahren zur Bestimmung des Beladungsgrades unterschiedlicher Filtervorrichtungen am Fahrzeug, z.B. Getriebeölfilter, Haupthydraulikfilter oder Motorfilter, angewendet werden.

In einer bevorzugten Ausführungsform können den Beladungsgrad repräsentierende Daten an eine bezüglich des Fahrzeugs externe Empfangseinheit (z.B. beim Fahrzeughersteller) übermittelt werden. Hierdurch können diese Daten dazu beitragen, die im Fahrzeug verwendeten Filtermedien und Filtergehäuse genauer zu analysieren und eine exaktere Dimensionierung der Filtervorrichtungen, insbesondere des Filtermediums und/oder des Filtergehäuses, zu unterstützen.

Das erfindungsgemäße Verfahren wird im Folgenden anhand der beigefügten Zeichnungen näher erläutert. Dabei sind hinsichtlich ihrer Funktion übereinstimmende bzw. vergleichbare Bauteile mit denselben Bezugszeichen gekennzeichnet. Es zeigen:

Fig. 1     ein Blockschaltbild mit schematischer Darstellung von Mitteln an einem Fahrzeug zur Bestimmung des aktuellen Beladungsgrades eines Filtermediums,

Fig. 2     ein Flussdiagramm mit Darstellung von Verfahrensschritten zur Bestimmung des aktuellen Beladungsgrades des Filtermediums,

Fig. 3     eine Referenz-Kennlinie mit Darstellung des Druckverlusts eines Filtermediums in Abhängigkeit einer Beladung.

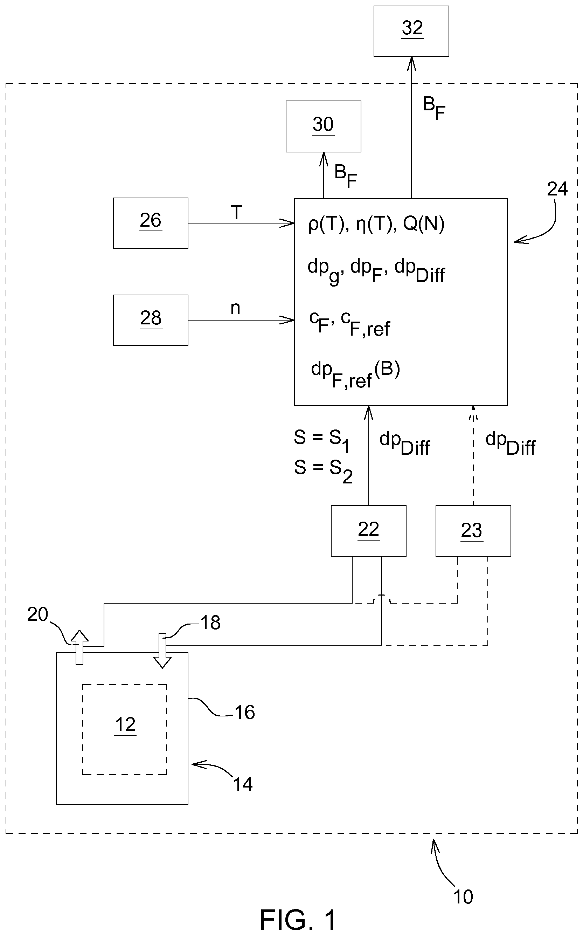

Fig. 1 zeigt schematisch ein Nutzfahrzeug 10, insbesondere ein landwirtschaftliches Fahrzeug (z.B. einen Traktor), mit Mitteln zur Bestimmung eines aktuellen Beladungsgrades $B_F$ eines von einem Fluid, insbesondere einem Öl, durchströmten Filtermediums 12 einer Filtervorrichtung 14, welche am Nutzfahrzeug 10 angeordnet ist. Die Filtervorrichtung 14 weist an ihrem Filtergehäuse 16 einen Filtereingang 18 und einen Filterausgang 20 auf.

Zwischen dem Filtereingang 18 und dem Filterausgang 20 ist ein Differenzdruckschalter 22 zur Detektion eines Differenzdruckes $dp_{Diff}$ an der Filtervorrichtung 14 angeschlossen. Der Differenzdruckschalter 22 kann außerhalb seines Umschaltpunktes zwei verschiedene Schaltzustände, z.B. einen ersten Schaltzustand (beispielsweise bei elektrisch geschlossenem Schalter) und einen zweiten Schaltzustand (beispielsweise bei elektrisch unterbrochenem Schalter), einnehmen. Der erste Schaltzustand entspricht einem Statussignal $S_1$, während der zweite Schaltzustand einem Statussignal $S_2$ entspricht. Diese Statussignale werden von einer Datenverarbeitungseinheit 24 registriert.

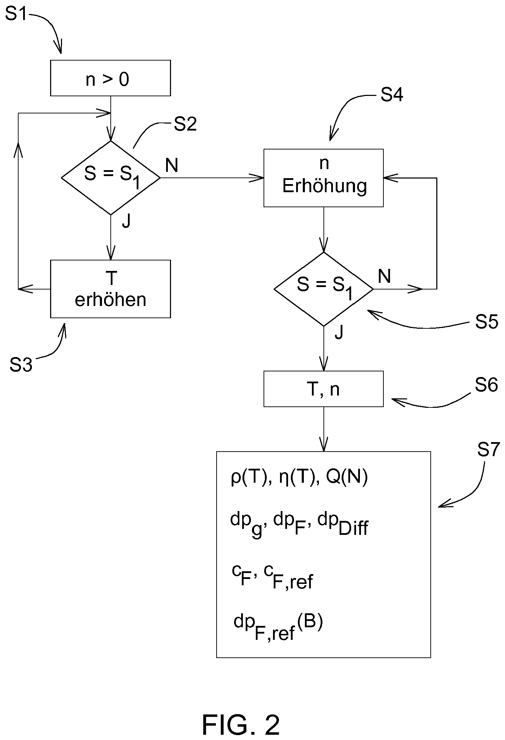

Im Ausführungsbeispiel gemäß Fig. 2 ist für die Bestimmung eines aktuellen Beladungsgrades $B_F$ des Filtermediums 12 der Differenzdruck $dp_{Diff}$ relevant, der im Zeitpunkt des Umschaltens (Umschaltpunkt) vom zweiten Schaltzustand $S_2$ in den ersten Schaltzustand $S_1$ des Differenzdruckschalters 22 vorliegt. Vorteilhaft bei Verwendung des Differenzdruckschalters 22 oder alternativ eines Ventils mit Druckschalter ist es, dass das Umschalten bei einer vorher festgelegten Druckdifferenz stattfindet, also der Differenzdruck $dp_{Diff}$ im Zeitpunkt des Umschaltens bekannt ist.

Als Betriebsgrößen des Nutzfahrzeugs 10 werden die Temperatur T des Fluids und die Drehzahl n eines Antriebsmotors des Nutzfahrzeugs 10 während des Fahrzeugbetriebs detektiert bzw. überwacht. Hierzu sind am Nutzfahrzeug 10 ein Temperatursensor 26 und ein Drehzahlsensor 28 vorhanden. Die Signale dieser Sensoren 26, 28 werden von der Datenverarbeitungseinheit 24 empfangen.

Die Signale der Sensoren 26, 28 sowie die Statussignale $S_A$, $S_{NA}$ und gegebenenfalls der Differenzdruck $dp_{Diff}$ werden in der Datenverarbeitungseinheit 24 verarbeitet. Außerdem ermittelt die Datenverarbeitungseinheit 24 weitere Betriebsgrößen bzw. Betriebsparameter wie z.B. eine von der Fluidtemperatur T abhängige Dichte $\rho(T)$ des Fluids, eine von der Fluidtemperatur T abhängige dynamische Viskosität $\eta(T)$ des Fluids, einen von der Drehzahl n des Antriebsmotors des Nutzfahrzeugs 10 und von der Fluidtemperatur T abhängigen Volumenstrom $Q(n, T)$ des Fluids, einen Druckverlust $dp_G$ des Filtergehäuses 16, einen Druckverlust $dp_F$ des Filtermediums 12, eine Betriebs-Filterkonstante $c_F$ und eine Referenz-Filterkonstante $c_{F,ref}$. Aus diesen Daten und gegebenenfalls weiterer Daten wird der Beladungsgrad $B_F$ des Filtermediums 12 abgeleitet. Der Beladungsgrad $B_F$ wird mittels einer optischen und/oder akustischen Anzeigeeinheit 30 im Nutzfahrzeug 10 signalisiert. Dabei wird der Beladungsgrad $B_F$ beispielsweise als prozentuale Angabe von 0% - 100%, als Mengenangabe (z.B. in Gramm) oder als mehrstufige optische Balkendarstellung angezeigt. Hierdurch kann der Fahrzeugführer oder ein anderer Nutzer des Nutzfahrzeugs 10 regelmäßig über den aktuellen Beladungsgrad $B_F$ informiert werden.

Der Beladungsgrad $B_F$ kann von der Datenverarbeitungseinheit 24 auch an eine externe Empfangseinheit 32 übermittelt werden, welche außerhalb des Nutzfahrzeugs 10 vorhanden ist, beispielsweise bei dem Fahrzeughersteller. Die Übermittlung und externe Auswertung des Beladungsgrades $B_F$ oder auch einzelner der übrigen vorgenannten Daten kann dazu beitragen, die Filtervorrichtung 14 oder einzelne Bestandteile davon genauer zu dimensionieren.

Gemäß Fig. 2 erfolgt der Start des Verfahrens bei laufendem Antriebsmotor, d.h. bei einer Drehzahl n > 0 (Schritt S1).

Im Verfahrensschritt S2 wird geprüft, ob sich der Differenzdruckschalter 22 in einem vom Soll-Zustand abweichenden Zustand befindet, d.h. ob der Status S dem Statussignal $S_1$ entspricht. Sollte dies der Fall sein (d.h. der Differenzdruckschalter 22 befindet sich nicht im Soll-Zustand), wird zunächst beim Fahrzeugbetrieb die Temperatur T des Fluids solange erhöht (Schritt S3), bis der Differenzdruckschalter 22 seinen Soll-Zustand einnimmt, d.h. der Status S dem Statussignal $S_2$ entspricht. In diesem Zustand bewirkt eine Erhöhung der Drehzahl n des Antriebsmotors, z.B. bei einer Beschleunigung des Nutzfahrzeugs 10 (Schritt S4) bei einem bestimmten Drehzahlhochlauf, dass der Umschaltpunkt des Differenzdruckschalters 22 detektiert wird, bei dem dieser wieder einen Zustand mit dem Status $S = S_1$ einnimmt (Schritt S5). Die Werte der Drehzahl n und der Fluidtemperatur T im Zeitpunkt des Umschaltpunktes werden erfasst (Schritt S6) und in der Datenverarbeitungseinheit 24 verarbeitet, um eine Betriebs-Information zu ermitteln (Schritt S7) und diese mit einer vordefinierten Referenz-Information zu vergleichen, um aus dem Vergleichsergebnis einen aktuellen Beladungsgrad $B_F$ abzuleiten. Alternativ zur vorgenannten Erhöhung der Drehzahl n kann im Schritt S4 auch eine Reduzierung der Drehzahl n verwendet werden, um einen Umschaltpunkt des Differenzdruckschalters 22 zu detektieren.

Vorzugsweise wird bei der Durchführung des Verfahrens im Schritt S4 eine Veränderung der Drehzahl n während des üblichen Arbeitsbetriebs des Nutzfahrzeugs 10 genutzt, so dass für die erforderliche Drehzahlveränderung keine separaten Verfahrensschritte erforderlich sind.

In einem Beispiel, das nicht Teil der Erfindung ist, kann alternativ zu dem Differenzdruckschalter 22 ein Differenzdrucksensor 23 oder zwei Drucksensoren verwendet werden, wie in Fig. 1 in gestrichelter Darstellung angedeutet. In diesem Fall wird eine Veränderung der Drehzahl n während des Verfahrensablaufes nicht benötigt. Vielmehr steht mittels des Differenzdrucksensors 23 bzw. der Drucksensoren der aktuelle Differenzdruck $dp_{Diff}$ kontinuierlich zur Verfügung, so dass die Betriebs-Information und daraus der aktuelle Beladungsgrad $B_F$ in unterschiedlichen bzw. beliebigen Betriebspunkten des Differenzdrucksensors 23 bzw. der Drucksensoren ermittelt werden kann.

Zur Ermittlung einer geeigneten Betriebs-Information kann von folgenden Zusammenhängen ausgegangen werden:

Der Differenzdruck $dp_{Diff}$ des Differenzdruckschalters 22 ist näherungsweise die Summe des Druckverlustes $dp_F$ des Filtermediums 12 und des Druckverlustes $dp_G$ des Filtergehäuses 16 gemäß

$$dp_{Diff} = dp_F + dp_G \qquad (1).$$

Der Druckverlust des Filtergehäuses dp$_G$ bei Durchströmung des Filtergehäuses 16 kann näherungsweise als Summe eines turbulenten Strömungsanteils c$_{turb}$ · ρ(T) · Q$^2$ und eines laminaren Strömungsanteils c$_{lam}$ · η(T) · Q betrachtet werden gemäß

$$dg_G(\rho,\eta,Q) \; = \; c_{turb} \cdot \rho(T) \cdot Q^2 \; + \; c_{lam} \cdot \eta(T) \cdot Q \qquad\qquad (2),$$

wobei c$_{turb}$ und c$_{lam}$ spezifische Konstanten für das Filtergehäuse 16 sind und Q der Volumenstrom (z.B. in Liter/Minute) des Fluids ist.

Der Druckverlust dp$_F$ des Filtermediums 12 lässt sich durch einen linearen Zusammenhang zwischen dem Volumenstrom Q und dem Druckverlust dp$_F$ beschreiben gemäß

$$dp_F(\eta,Q) \; = \; c_F \cdot \eta(T) \cdot Q \qquad\qquad (3).$$

Ein Auflösen der Gleichung (3) nach der Betriebs-Filterkonstante c$_F$ unter Berücksichtigung der Gleichung (1) ergibt

$$c_F \; = \; 1/(\eta(T) \cdot 1/Q \cdot (dp_{Diff} \; - \; dp_G) \qquad\qquad (4).$$

Für die temperaturabhängige Dichte ρ(T) des Fluids kann ein linearer Zusammenhang angenommen werden gemäß

$$\rho(T) \; = \; \rho(15°C) \; - \; a \cdot (T - 15°C) \qquad\qquad (5),$$

wobei die Fluiddichte p(15°C) bei 15°C und der Korrekturwert a Kennfeldern oder Tabellen entnommen werden können. Somit lässt sich die temperaturabhängige Fluiddichte ρ(T) ermitteln.

Für die temperaturabhängige dynamische Viskosität η(T) des Fluids kann ein linearer Zusammenhang angenommen werden gemäß

$$\eta(T) \; = \; \rho(T) \cdot \nu(T) \qquad\qquad (6),$$

wobei v(T) eine von der Fluidtemperatur abhängige kinematische Viskosität des Fluids ist, welche für das jeweilige Fluid durch Heranziehen entsprechender Kennfeld- oder Tabellenwerte und auch unter Berücksichtigung der sogenannten Ubbelohde-Gleichung bekannt ist.

Der aktuelle Volumenstrom Q bzw. Q(n,T) des Fluids in Abhängigkeit der Motordrehzahl n und der Fluidtemperatur T lässt sich vorzugsweise ebenfalls einem Kennfeld oder dergleichen entnehmen. Beispielsweise wird ein Wirkungsgradkennfeld (volumetrischer Wirkungsgrad) der jeweiligen Fluidpumpe bei dem vorliegenden Gegendruck der Fluidpumpe in Abhängigkeit der Fluidtemperatur T und der Motordrehzahl n erstellt. Im Falle eines stark schwankenden Gegendrucks und einer ausgeprägten Abhängigkeit des volumetrischen Wirkungsgrades vom Gegendruck der Fluidpumpe ist die Verwendung der vorgenannten Sensoren bzw. des Differenzdrucksensors 23 anstatt des Differenzdruckschalters 22 vorteilhaft, um die Genauigkeit bei der Bestimmung des Beladungsgrades B$_F$ zu verbessern.

Somit können sämtliche Betriebsgrößen bzw. Betriebsparameter in den obigen Gleichungen ermittelt werden, wenn die Verarbeitungseinheit 24 die erfasste bzw. überwachte Fluidtemperatur T und Motordrehzahl n sowie den Differenzdruck dp$_{Diff}$ im Umschaltpunkt des Differenzdruckschalters 22 empfängt und entsprechend verarbeitet.

Daraus lässt sich gemäß Gleichung (4) die Betriebs-Filterkonstante c$_F$ als Betriebs-Information ermitteln. Die Betriebs-Filterkonstante c$_F$ kann mit einer vordefinierten Referenz-Filterkonstante c$_{F,ref}$ als Referenz-Information verglichen werden. Aus dem Verhältnis c$_F$/c$_{F,ref}$ kann ein aktueller prozentualer Beladungsgrad B$_F$ des Filtermediums 12 abgeleitet werden. Hierbei kann die Referenz-Filterkonstante c$_{F,ref}$ beispielsweise analog zur Gleichung (3) ermittelt werden als

$$c_{F,ref} \; = \; dp_{F,ref} \; / \; (\eta_{ref} \cdot Q_{ref}) \qquad\qquad (7),$$

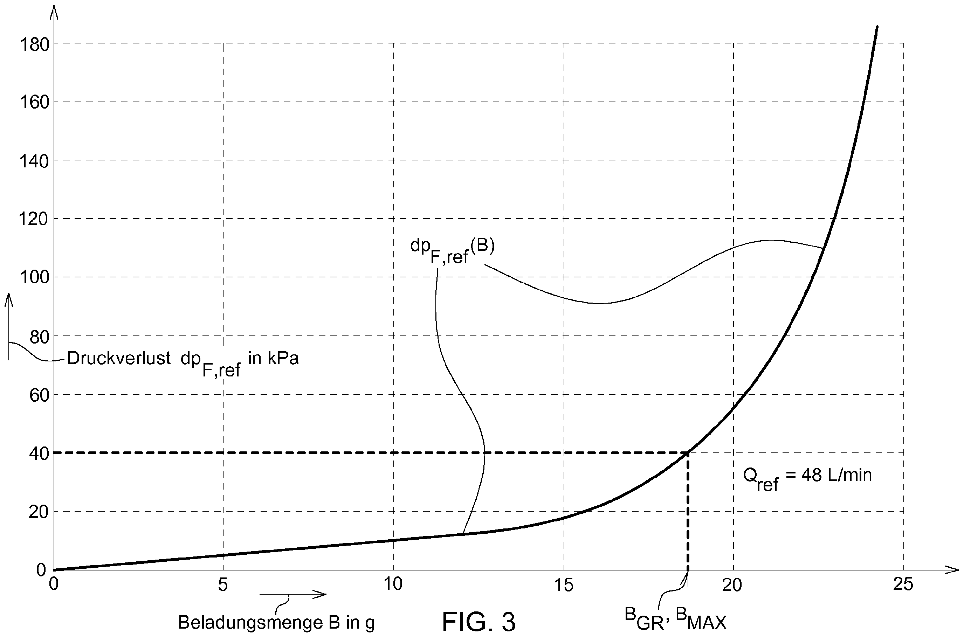

wobei $dp_{F,ref}$ ein vordefinierter Druckverlust des Filtermediums 12 bei einem vordefinierten Beladungsgrenzwert $B_{GR}$ (entspricht einem vordefinierten Beladungsgrad von 100%) ist bei einem vorgegebenen Volumenstrom $Q_{ref}$ (z.B. 48 Liter/Minute) und bei einer vorgegebenen dynamischen Viskosität $\eta_{ref}$. Diese Werte können beispielsweise durch den Filterhersteller als Normwerte festgelegt sein und/oder entsprechenden Daten aus Kennlinien bzw. Tabellen entnommen werden (Fig. 3). Die Beladungsgrenze bzw. der Beladungsgrenzwert $B_{GR}$ kann folglich unter den vorgegebenen Referenzbedingungen vordefiniert werden.

In einer weiteren Ausführungsform kann als Referenz-Information eine vorgegebene Kennlinie bzw. Funktion des Filtermediums 12 dienen, welche analog zur Darstellung in Fig. 3 einen Druckverlust $dp_{F,ref}$ des Filtermediums 12 in Abhängigkeit der Beladung B (z.B. Menge in Gramm) wiedergibt. Diese Referenz-Information kann dann mit einem im Fahrzeugbetrieb ermittelten Druckverlust $dp_F$ des Filtermediums 12 als Betriebs-Information verglichen werden, um eine aktuelle Beladungsmenge zu ermitteln. Die aktuelle Beladungsmenge kann als Betriebs-Information beispielsweise mit einer vordefinierten maximalen Beladungsmenge $B_{MAX}$ als Referenz-Information verglichen werden, um aus dem Verhältnis beider Werte wiederum einen aktuellen prozentualen Beladungsgrad $B_F$ des Filtermediums 12 abzuleiten.

## Patentansprüche

1. Verfahren zur Bestimmung eines Beladungsgrades ($B_F$) eines von einem Fluid durchströmten Filtermediums (12) einer Filtervorrichtung (14) an einem Fahrzeug (10), bei dem das Filtermedium (12) in einem Filtergehäuse (16) der Filtervorrichtung (14) mit einem Filtereingang (18) und einem Filterausgang (20) einliegt, wobei zur Bestimmung des Beladungsgrades ($B_F$)

   - eine Betriebs-Information ($c_F$, $dp_F$) der Filtervorrichtung (14) in Abhängigkeit mindestens einer Betriebsgröße ($n$, $T$, $Q$, $\eta$, $\rho$, $dp_G$, $dp_{Diff}$) des Fahrzeugs (10) ermittelt wird,
   - eine vordefinierte Referenz-Information ($c_{F,ref}$, $dp_{F,ref}(B)$) der Filtervorrichtung (14) mit der Betriebs-Information ($c_F$, $dp_F$) verglichen wird, und
   - aus dem Vergleichsergebnis der Beladungsgrad ($B_F$) abgeleitet wird, wobei die Betriebs-Information ($c_F$, $dp_F$) in Abhängigkeit von durch einen Druckverlust ($dp_G$) des Filtergehäuses (16) und einen Druckverlust ($dp_{Diff}$) der Filtervorrichtung (14) zwischen dem Filtereingang (18) und dem Filterausgang (20) gebildeten Betriebsgrößen ermittelt wird, **dadurch gekennzeichnet, dass** der Druckverlust der Filtervorrichtung (14) zwischen dem Filtereingang (18) und dem Filterausgang (20) einem Differenzdruck ($dp_{Diff}$) eines Differenzdruckschalters (22) in dessen Umschaltpunkt entspricht, und die Betriebs-Information ($c_F$, $dp_F$) in Abhängigkeit mindestens einer während des Umschaltpunktes des Differenzdruckschalters (22) erfassten Betriebsgröße ($n$, $T$, $Q$, $\eta$, $\rho$, $dp_G$) ermittelt wird.

2. Verfahren nach Anspruch 1, **dadurch gekennzeichnet, dass**

   - die Referenz-Information eine Referenz-Filterkonstante ($c_{F,ref}$) bei einem vordefinierten Grenzwert ($B_{GR}$) der Beladung (B) aufweist, und/oder
   - die Betriebs-Information eine einen Betriebszustand des Filtermediums (12) repräsentierende Betriebs-Filterkonstante ($c_F$) aufweist.

3. Verfahren nach Anspruch 1 oder 2, **dadurch gekennzeichnet, dass**

   - die Referenz-Information einen das Filtermedium (12) repräsentierenden Druckverlust ($dp_{F,ref}$) in Abhängigkeit einer Beladung (B) aufweist, und/oder
   - die Betriebs-Information einen während des Fahrzeugbetriebs ermittelten Druckverlust ($dp_F$) des Filtermediums (12) aufweist.

4. Verfahren nach einem der vorhergehenden Ansprüche, **dadurch gekennzeichnet, dass** die Betriebs-Information ($c_F$, $dp_F$) in Abhängigkeit mindestens einer der folgenden Betriebsgrößen ermittelt wird:

   - einer Temperatur (T) des Fluids,
   - einer Drehzahl (n) eines Antriebsmotors des Fahrzeugs (10) .

5. Verfahren nach Anspruch 4, **dadurch gekennzeichnet, dass** die Betriebs-Information ($c_F$, $dp_F$) in Abhängigkeit mindestens einer der folgenden Betriebsgrößen ermittelt wird:

- einer temperaturabhängigen Dichte (p(T)) des Fluids,
- einer temperaturabhängigen Viskosität ($\eta$(T)) des Fluids,
- eines von der Drehzahl (n) des Antriebsmotors des Fahrzeugs (10) und/oder von der Temperatur (T) des Fluids abhängigen Volumenstromes Q(n,T) des Fluids.

6. Verfahren nach Anspruch 1, **dadurch gekennzeichnet, dass**

- der Differenzdruckschalter (22) vor Ermittlung der Betriebs-Information ($c_F$, $dp_F$) einen Schaltzustand ($S_2$) von mindestens zwei Schaltzuständen ($S_1$, $S_2$) aufweist, und
- während einer Veränderung einer Drehzahl (n) eines Antriebsmotors des Fahrzeugs (10) der Umschaltpunkt erreicht wird, bei dem der Differenzdruckschalter (22) in einen anderen Schaltzustand ($S_1$) überführt wird.

7. Verfahren nach Anspruch 6, **dadurch gekennzeichnet, dass**

- vor der Veränderung der Drehzahl (n) des Antriebsmotors geprüft wird, ob der Differenzdruckschalter (22) einen Soll-Schaltzustand ($S_2$) aufweist, und
- bei festgestelltem abweichenden Schaltzustand ($S_1$) eine Betriebsgröße (T) des Fahrzeugs (10) zumindest solange verändert wird, bis der Soll-Schaltzustand ($S_2$) des Differenzdruckschalters (22) festgestellt wird.

8. Verfahren nach Anspruch 7, **dadurch gekennzeichnet, dass** als Betriebsgröße eine Temperatur (T) des Fluids zumindest solange erhöht wird, bis der Soll-Schaltzustand ($S_2$) des Differenzdruckschalters (22) festgestellt wird.

9. Verfahren nach einem der vorhergehenden Ansprüche, **dadurch gekennzeichnet, dass** das Fluid ein Öl ist.

10. Verfahren nach einem der vorhergehenden Ansprüche, **dadurch gekennzeichnet, dass** den Beladungsgrad ($B_F$) repräsentierende Daten an eine bezüglich des Fahrzeugs (10) externe Empfangseinheit (32) gesendet werden.

## Claims

1. Method for determining a load level ($B_F$) of a filter medium (12), through which a fluid flows, of a filter device (14) on a vehicle (10), in which the filter medium (12) fits into a filter housing (16) of the filter device (14) with a filter input (18) and a filter output (20), wherein in order to determine the load level ($B_F$)

- operating information ($c_F$, $dp_F$) of the filter device (14) is determined as a function of at least one operating variable (n, T, Q, $\eta$, $\rho$, $dp_G$, $dp_{Diff}$) of the vehicle (10),
- predefined reference information ($c_{F,ref}$, $dp_{F,ref}$ (B)) of the filter device (14) is compared with the operating information ($c_F$, $dp_F$), and
- the loading level ($B_F$) is derived from the comparison result, wherein the operating information ($c_F$, $dp_F$) is determined as a function of operating variables which are formed by a pressure loss ($dp_G$) of the filter housing (16) and a pressure loss ($dp_{Diff}$) of the filter device (14) between the filter input (18) and the filter output (20), **characterized in that** the pressure loss of the filter device (14) between the filter input (18) and the filter output (20) corresponds to a differential pressure ($dp_{Diff}$) of a differential pressure switch (22) at the switching point thereof, and the operating information ($c_F$, $dp_F$) is determined as a function of at least one operating variable (n, T, Q, $\eta$, $\rho$, $dp_G$) which is acquired during the switching point of the differential pressure switch (22).

2. Method according to Claim 1, **characterized in that**

- the reference information has a reference filter constant ($c_{F,ref}$) at a predefined limiting value ($B_{GR}$) of the load (B), and/or
- the operating information has an operating filter constant ($c_F$) which represents an operating state of the filter medium (12).

3. Method according to Claim 1 or 2, **characterized in that**

- the reference information has a pressure loss ($dp_{F,ref}$), representing the filter medium (12), as a function of a load (B), and/or
- the operating information has a pressure loss ($dp_F$), determined during the operation of the vehicle, of the filter medium (12).

4. Method according to one of the preceding claims, **characterized in that** the operating information ($c_F$, $dp_F$) is determined as a function of at least one of the following operating variables:

- a temperature (T) of the fluid,
- a rotational speed (n) of a drive motor of the vehicle (10).

5. Method according to Claim 4, **characterized in that** the operating information ($c_F$, $dp_F$) is determined as a function of at least one of the following operating variables:

- a temperature-dependent density ($p(T)$) of the fluid,
- a temperature-dependent viscosity ($\eta(T)$) of the fluid,
- a volume flow $Q(n,T)$ of the fluid, said volume flow $Q(n,T)$ being dependent on the rotational speed (n) of the drive motor of the vehicle (10) and/or on the temperature (T) of the fluid.

6. Method according to Claim 1, **characterized in that**

- the differential pressure switch (22) has, before the determination of the operating information ($c_F$, $dp_F$), a switched state ($S_2$) of at least two switched states ($S_1$, $S_2$), and
- during a change in a rotational speed (n) of a drive motor of the vehicle (10), the switching time at which the differential pressure switch (22) is moved into another switched state ($S_1$) is reached.

7. Method according to Claim 6, **characterized in that**

- before the change in the rotational speed (n) of the drive motor, it is checked whether the differential pressure switch (22) has a setpoint switched state ($S_2$), and
- when a different switched state ($S_1$) is detected, an operating variable (T) of the vehicle (10) is changed at least until the setpoint switched state ($S_2$) of the differential pressure switch (22) is detected.

8. Method according to Claim 7, **characterized in that** a temperature (T) of the fluid is increased as an operating variable at least until the setpoint switched state ($S_2$) of the differential pressure switch (22) is detected.

9. Method according to one of the preceding claims, **characterized in that** the fluid is an oil.

10. Method according to one of the preceding claims, **characterized in that** data representing the loading level ($B_F$) are transmitted to a receiver unit (32) which is external with respect to the vehicle (10).

**Revendications**

1. Procédé de détermination d'un degré de charge ($B_F$) d'un milieu filtrant (12), traversé par un fluide, d'un dispositif de filtration (14) sur un véhicule (10), le milieu filtrant (12) étant logé dans un boîtier de filtre (16) du dispositif de filtration (14) pourvu d'une entrée de filtre (18) et d'une sortie de filtre (20), pour déterminer le degré de charge ($B_F$)

- une information de fonctionnement ($C_F$, $dp_F$) du dispositif de filtration (14) étant déterminée en fonction d'au moins une variable de fonctionnement (n, T, Q, $\eta$, $\rho$, $dp_G$, $dp_{Diff}$) du véhicule (10),
- une information de référence prédéfinie ($C_{F,réf}$, $dp_{F,réf}(B)$) du dispositif de filtration (14) étant comparée à l'information de fonctionnement ($c_F$, $dp_F$), et
- le degré de charge ($B_F$) étant déduit du résultat de la comparaison, l'information de fonctionnement ($C_F$, $dp_F$) étant déterminée en fonction de grandeurs de fonctionnement formées par une perte de pression ($dp_G$) du boîtier de filtre (16) et par une perte de pression ($dp_{Diff}$) du dispositif de filtration (14) entre l'entrée de filtre (18) et la sortie de filtre (20), **caractérisé en ce que** la perte de pression du dispositif de filtration (14) entre l'entrée de filtre (18) et la sortie de filtre (20) correspond à une pression différentielle ($dp_{Diff}$) d'un contacteur à pression différentielle (22) dans le point de commutation de celui-ci et l'information de fonctionnement ($c_F$, $dp_F$) étant déterminée en fonction d'au moins une grandeur de fonctionnement (n, T, Q, $\eta$, $\rho$, $dp_G$) détectée pendant le point de commutation du contacteur à pression différentielle (22).

**2.** Procédé selon la revendication 1, **caractérisé en ce que**

- l'information de référence présente une constante de filtration de référence ($C_{F,réf}$) à une limite prédéfinie ($B_{GR}$) de la charge (B), et/ou
- l'information de fonctionnement présente une constante de filtration de fonctionnement ($C_F$) représentant l'état de fonctionnement du milieu filtrant (12).

**3.** Procédé selon la revendication 1 ou 2, **caractérisé en ce que**

- l'information de référence comporte une perte de pression ($dp_{F,réf}$), représentant le milieu filtrant (12), en fonction d'une charge (B), et/ou
- l'information de fonctionnement comporte une perte de pression ($dp_F$) du moyen filtrant (12) qui est déterminée pendant le fonctionnement du véhicule.

**4.** Procédé selon l'une des revendications précédentes, **caractérisé en ce que** l'information de fonctionnement ($c_F$, $dp_F$) est déterminée en fonction d'au moins une des grandeurs de fonctionnement suivantes :

- la température (T) du fluide,
- la vitesse de rotation (n) du moteur d'entraînement du véhicule (10).

**5.** Procédé selon la revendication 4, **caractérisé en ce que** l'information de fonctionnement ($C_F$, $dp_F$) est déterminée en fonction d'au moins une des grandeurs de fonctionnement suivantes :

- la densité ($\rho(T)$), fonction de la température, du fluide,
- la viscosité ($\eta(T)$), fonction de la température, du fluide,
- le débit volumique Q (n, T) du fluide, lequel débit dépend de la vitesse de rotation (n) du moteur d'entraînement du véhicule (10) et/ou de la température (T) du fluide.

**6.** Procédé selon la revendication 1, **caractérisé en ce que**

- le contacteur à pression différentielle (22) présente un état de commutation ($S_2$) parmi au moins deux états de commutation ($S_1$, $S_2$) avant de déterminer l'information de fonctionnement ($C_F$, $dp_F$), et
- le point de commutation, auquel le contacteur à pression différentielle (22) est passé dans un autre état de commutation ($S_1$), est atteint lors d'une variation de la vitesse de rotation (n) du moteur d'entraînement du véhicule (10).

**7.** Procédé selon la revendication 6, **caractérisé en ce que**

- on vérifie avant la variation de la vitesse de rotation (n) du moteur d'entraînement si le contacteur à pression différentielle (22) présente l'état de commutation de consigne ($S_2$), et
- si un état de commutation différent ($S_1$) est déterminé, une grandeur de fonctionnement (T) du véhicule (10) est modifiée au moins jusqu'à ce que l'état de commutation de consigne ($S_2$) du contacteur à pression différentielle (22) soit déterminé.

**8.** Procédé selon la revendication 7, **caractérisé en ce que**, la température (T) du fluide, en tant que grandeur de fonctionnement, est augmentée au moins jusqu'à ce que l'état de commutation de consigne ($S_2$) du contacteur à pression différentielle (22) soit déterminé.

**9.** Procédé selon l'une des revendications précédentes, **caractérisé en ce que** le fluide est une huile.

**10.** Procédé selon l'une des revendications précédentes, **caractérisé en ce que** des données représentant le degré de charge ($B_F$) sont envoyées à une unité de réception (32) extérieure au véhicule (10).

FIG. 1

S1

S4

n > 0

$S = S_1$   N

n
Erhöhung

S2

J

T
erhöhen

$S = S_1$   N

S3

J

S5

T, n

S6

$\rho(T),\ \eta(T),\ Q(N)$

$dp_g,\ dp_F,\ dp_{Diff}$

$c_F,\ c_{F,ref}$

$dp_{F,ref}(B)$

S7

FIG. 2

FIG. 3

EP 3 287 184 B1

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- US 20110054811 A1